Europäisches Patentamt

European Patent Office

Office européen des brevets

(19)

(11) **EP 0 642 394 B1**

(12) **FASCICULE DE BREVET EUROPEEN**

(45) Date de publication et mention
de la délivrance du brevet:
**29.04.1998 Bulletin 1998/18**

(21) Numéro de dépôt: **93910114.3**

(22) Date de dépôt: **13.05.1993**

(51) Int. Cl.$^6$: **B09B 3/00**

(86) Numéro de dépôt international:
**PCT/FR93/00461**

(87) Numéro de publication internationale:
**WO 93/24249 (09.12.1993 Gazette 1993/29)**

(54) **PROCEDE DE DECONTAMINATION DES TERRES POLLUEES PAR DES METAUX**

VERFAHREN ZUR DEKONTAMINATION VON DURCH METALLE VERUNREINIGTEN BÖDEN

PROCESS FOR DECONTAMINATION OF METAL-POLLUTED EARTH

(84) Etats contractants désignés:
**AT BE CH DE DK ES FR GB GR IE IT LI LU NL PT
SE**

(30) Priorité: **29.05.1992 FR 9206635**

(43) Date de publication de la demande:
**15.03.1995 Bulletin 1995/11**

(73) Titulaire: **UNIMETAL
57120 Rombas (FR)**

(72) Inventeurs:
• **RIZET, Laurent
F-74250 Viuz-en-Sallaz (FR)**
• **CHARPENTIER, Pierre, Emmanuel
F-74100 Ville-la-Grand (FR)**

(74) Mandataire: **Ventavoli, Roger
USINOR,
Direction Propriété Industrielle,
Immeuble "La Pacific",
La Défense,
11/13 Cours Valmy,
TSA 10001
92070 La Défense (FR)**

(56) Documents cités:
EP-A- 0 022 324    EP-A- 0 034 137
EP-A- 0 034 391    BE-A- 894 733
DE-A- 3 931 017    DE-C- 3 919 788
GB-A- 1 568 362    US-A- 4 606 765
US-A- 4 824 482

• **DATABASE WPIL Section Ch, Week 8341, 23
Novembre 1983 Derwent Publications Ltd.,
London, GB; Class M28, AN 83-787541 [41] &
SU,A,979 527 (URALS KIROV POLY ET AL) 9
December 1982**
• **PATENT ABSTRACTS OF JAPAN vol. 14, no. 24
(C-677)18 Janvier 1990 & JP,A,01 263 290
(PURANTETSUKUSU K.K.) 19 October 1989**

Remarques:
Le dossier contient des informations techniques
présentées postérieurement au dépôt de la
demande et ne figurant pas dans le présent
fascicule.

EP 0 642 394 B1

## Description

L'invention concerne un procédé de décontamination des terres polluées par des métaux.

Depuis plusieurs années, la protection de l'environnement est devenue un souci constant et de nombreuses études ont été menées pour résoudre les problèmes liés à la pollution.

La pollution des terres par des éléments métalliques, occasionnée de diverses manières, entraîne non seulement la présence desdits éléments en concentration trop importante par rapport aux normes admises mais peut entraîner aussi une pollution des nappes phréatiques et des cours d'eau.

Il est donc important de pouvoir traiter ces terres polluées de manière à diminuer cette pollution en faisant revenir les concentrations en éléments métalliques à des taux conformes aux normes admises.

Cependant les seules méthodes de décontamination disponibles actuellement sont de type pyrolytique, ou hydrométallurgique par voie acide, et ont donc notamment pour conséquence la formation de déchets qu'il n'est pas possible de recycler et qui nécessite un stockage, ou le dégagement de gaz toxiques.

On connaît néanmoins, par exemple par le Document BE-A-894 733, un procédé de traitement hydrométallurgique par voie basique au zinc des boues et poussières sidérurgiques qui consiste en l'association de trois phases opératoires successives, et dans cet ordre :

- lixiviation des boues à la soude (milieu basique donc) ;
- cémentation par ajout de Zn métal à la solution de lixiviation pour précipiter et récupérer les métaux plus électronégatif que le zinc et recueillir une solution riche en zinc dissous ;
- électrolyse de cette solution pour récupération du zinc dissous par réduction cathodique.

Cette méthode, conçue pour le traitement de matériaux suffisamment riches en zinc au départ (classiquement de 5 à 50 % pondéraux environ pour les poussières d'aciérie) est toutefois mal adaptée au traitement de matières à faible teneur en zinc, voire exemptes de zinc comme c'est généralement le cas des terres polluées auxquelles s'intéresse d'abord l'invention.

La même observation vaut pour le traitement, analogue à celui évoqué ci-dessus, décrit dans le Document GB-A-1568362.

Le but de l'invention est de parvenir à un traitement hydrométallurgique au zinc capable de décontaminer efficacement les matières à teneur en zinc faible ou nulle, telles que des terres polluées.

A cet effet, l'invention a pour objet un procédé hydrométallurgique par voie basique au zinc de décontamination des terres polluées par des éléments métalliques, ce procédé étant défini dans la revendication 1.

Conformément à une réalisation préférée de l'invention, les déchets sidérurgiques ajoutés sont des poussières d'aciérie électrique. De préférence encore, on ajoute les déchets sidérurgiques sousforme d'un lixiviat basique au lixiviat principal issu du traitement des terres à la sortie de l'étape de lixiviation, avant l'étape de cémentation.

Une des caractéristiques secondaires de l'invention est que l'électrolyse de la solution est avantageusement réalisée sur une cathode de magnésium, de préférence sous forte densité de courant, ce qui permet la récupération du zinc sous forme de poudre de zinc ultrafine présentant des qualités particulièrement adaptées à son recyclage vers l'étape de cémentation du procédé selon l'invention. Toutefois, en fonction de ses qualités, cette poudre ultra-fine peut également être utilisés dans d'autres domaines d'application et être éventuellement commercialisée en tout ou partie.

Selon une possibilité de l'invention, une première adjonction de poudre de zinc est réalisée lors de la première cémentation, la poudre de zinc produite par la suite lors de l'étape électrolytique est réintroduite dans le circuit du procédé pour réaliser les cémentations suivantes. Il en résulte de façon avantageuse un système de production et d'auto-consommation de poudres de zinc.

Dans son application pratique, le procédé selon l'invention permet une décontamination des terres polluées par des métaux tels que notamment le plomb, le cuivre, l'étain, le nickel, l'arsenic, le zinc ou le cadnium.

Dans les cas les plus fréquents des terres polluées à traiter, l'invention s'applique au traitement de terres initialement non zincifères, toutefois elle peut s'appliquer avec les mêmes effets et avantages à d'autres applications où la composition à traiter contient elle-même du zinc sous forme quelconque, par exemple aux crassiers et autres décharges sidérurgiques.

Ainsi le procédé de l'invention peut avantageusement être appliqué pour remédier à toutes pollutions, outre celles des terres naturelles, occasionnées par la présence d'éléments métalliques, notamment dans le traitement des piles électriques usagées ou des poussières d'aciéries et pour le traitement de certains minerais.

On entendra donc par "terres polluées" au sens du présent mémoire, non seulement les terres naturelles, mais tout autre matière susceptible de subir un traitement de dépollution pour y éliminer les métaux indésirables précités.

L'invention sera bien comprise et d'autres aspects et avantages ressortiront de la description qui suit donnée en référence à la planche de dessins annexée sur laquelle :

- la figure 1 donne un schéma fonctionnel de principe du procédé selon l'invention dans sa forme générale ;
- la figure 2 est une représentation fonctionnelle analogue à la figure 1 d'un mode de réalisation préféré du procédé selon l'invention.

Sur les figures, les mêmes éléments sont désignés par des références identiques.

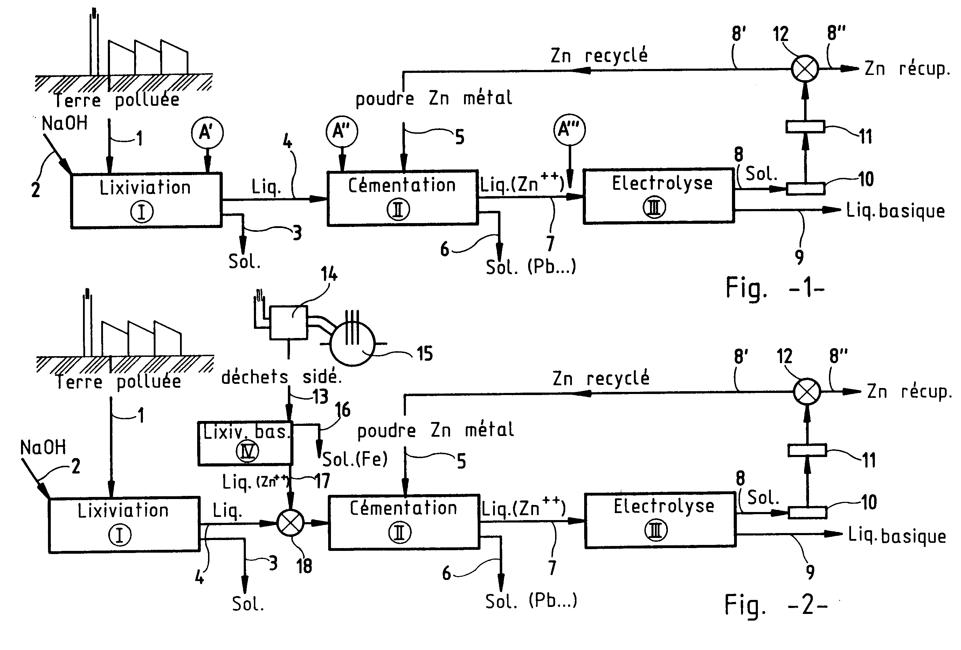

On se reporte d'abord à la figure 1, que l'on parcourt de la gauche vers la droite :

- Etape de lixiviation I

L'étape de lixiviation I permet la mise en solution des éléments métalliques contenus dans la terre polluée à traiter 1.

De préférence, la lixiviation s'opère en milieu basique créé par un apport 2 de NaOH afin de précipiter sous forme d'hydroxydes insolubles des métaux éventuellement présents comme le fer, que l'on pourra alors extraire simplement par séparation solide-liquide, les autres éléments passant en solution tant en milieu basique, qu'en milieu acide.

La terre contaminée 1 est d'abord passée dans un tamis non représenté de manière à éliminer tous les graviers et autres débris végétaux qui ne contiennent généralement pas ou peu de métaux contaminants. Ces débris et graviers sont lavés afin d'éliminer la terre résiduelle pouvant contenir les métaux contaminants. Il est avantageux pour la lixiviation que la terre soit tamisée le plus fin possible. Dans le cas où cela est possible, un délitage serait avantageux afin d'améliorer la cinétique de lixiviation qui est liée à la granulométrie de la terre.

La terre est ensuite mise en suspension dans une solution de soude. Les métaux alors présents passent en solution, le fer lui éventuellement présent précipite comme on l'a dit en hydroxyde qui sera éliminé par une séparation solide-liquide ultérieure.

La cinétique de lixiviation des métaux à l'état de sels, notamment les carbonates et les sulfates, ou d'oxydes est beaucoup plus rapide que celle de la lixiviation des métaux sous forme métallique.

Ainsi le plomb, par exemple réagit selon les réactions suivantes :

$$Pb^{2+} + 4\,OH^- \rightarrow PbO_2^{2-} + 2\,H_2O$$

$$PbO + 2\,OH^- \rightarrow PbO_2^{2-} + H_2O$$

De façon particulièrement avantageuse, on peut injecter de l'eau oxygénée ($H_2O_2$) dans la solution de façon à oxyder les métaux présents sous forme métallique. Par exemple pour le plomb on a les réactions suivantes :

$$Pb + H_2O_2 + 2\,OH^- \rightarrow PbO_2^{2-} + 2\,H_2O$$

ou

$$Pb + 1/2\,O_2 + 2\,OH^- \rightarrow PbO_2^{2-} + H_2O$$

L'utilisation d'ultrasons lors de l'étape de lixiviation peut avantageusement améliorer la lixiviation. En effet, les ultrasons permettent une augmentation du contact solide/liquide en créant une forte agitation.

De manière particulièrement avantageuse, l'utilisation des ultrasons peut également entraîner la formation d'eau oxygénée utile à l'oxydation des éléments polluants sous forme métallique.

Des alumino-silicates (argiles) peuvent être également présents dans les terres et ils peuvent alors passer partiellement en solution eux aussi au cours de la lixiviation. Ils pourront être reprécipités par injection de chaux dans la solution.

La présence de sels peut également être constatée et eux aussi passent dans la solution. Ils seront avantageusement éliminés en fin de traitement par évaporation ou par résines échangeuses d'ions si leur concentration est trop élevée.

On effectue ensuite une séparation solide/liquide. La terre 3 ainsi dépolluée est alors lavée en milieu basique, neutralisée, filtrée et elle peut être remise en place après contrôle. Le procédé selon l'invention permet donc une décontamination de toute la terre traitée.

- Etape de cémentation II

Le lixiviat (ou permeat) 4 contenant les métaux solubilisés subit alors une étape de cémentation II qui permet l'extraction des métaux en solution à l'aide de poudre de zinc par échange électrochimique.

Ainsi, par exemple, pour une solution contenant du plomb, la réaction d'oxydo-réduction suivante intervient :

$$Zn + PbO_2^{2-} \rightarrow ZnO_2^{2-} + Pb$$

L'adjonction de zinc métallique en poudre 5 se fait avantageusement de façon à provoquer une réaction complète entre le zinc et les métaux polluants. On opère ensuite une nouvelle séparation liquide/solide. Les céments 6 de métaux ainsi obtenus sont ensuite lavés et filtrés.

Selon une autre particularité de l'invention, les métaux contenus dans les céments 6 peuvent être recyclés de sorte qu'ils ne constituent pas des déchets inutilisables que l'on doit stocker en décharge contrôlée.

La solution 7 issue de l'étape de cémentation contenant du zinc sous forme de zincates est alors soumise à une électrolyse III.

- Etape d'électrolyse III

L'électrolyse III selon l'invention est réalisée dans des conditions permettant l'obtention de poudres de zinc ultra-fines 8 pouvant être utilisées en tout ou partie 8' pour la cémentation par recyclage. La poudre de zinc, éventuellement obtenue en excès 8", se présente sous une forme permettant sa commercialisation pour d'autres domaines d'applications tels que notamment les peintures anti-corrosion. La solution basique 9 peut être recyclée en lixiviation I de manière à créer un circuit de liquide en boucle fermée entre les trois étapes de traitement.

L'emploi d'une cathode de magnésium permet avantageusement l'obtention d'un dépôt de zinc peu adhérent et sous un rendement faradique plus élevé qu'avec les autres cathodes utilisées lors d'électrolyses alcalines.

Dans un mode de mise en oeuvre particulier de l'invention, appliqué au traitement de terres polluées, la concentration en soude de la solution contenant le zinc est de 240 à 300 g/l, soit environ 6N. Cette concentration permet d'atteindre une conductivité maximale de la solution et une solubilisation maximale de 45 à 50 g/l de zinc.

Dans cette solution sodique, le zinc se trouve sous forme de zincates $ZnO_2^{2-}$ et il est mis en solution, dans la phase de lixiviation I par exemple, selon la réaction suivante :

$$ZnO + 2\,OH^- \rightarrow ZnO_2^{2-} + H_2O$$

De façon à obtenir dans la phase d'électrolyse III les caractéristiques suivantes :

- Rendement faradique : > 90 %
- Vitesse de production spécifique : 1,9 kg/h.m$^2$
- Consommation énergétique : < 4 kWh/kg

On travaille à une température de la solution de 20 à 50°C et de préférence à 40°C. Si on dépasse les 50 °C, on peut observer un dépôt massif trop adhérent et une redissolution trop rapide de la poudre de zinc.

La densité du courant d'électrolyse est élevée. La valeur la plus appropriée est fonction de la température. Elle se situe en général entre 10 et 30 A/dm$^2$, et sera de préférence de l'ordre de 20 A/dm$^2$.

La limite de solubilité de l'oxyde de zinc dans la soude 6N est de 45 à 50 g/l. La concentration des solutions de zinc, pouvant être traitée par le procédé de l'invention, se situe entre 0 et 50 g/l et préférentiellement entre 8 et 45 g/l. En tous cas, si on travaille avec une concentration inférieure à 8 g/l, on risque de voir le dépôt de zinc se décoller au fur et à mesure, et provoquer alors des courts-circuits. De plus, le rendement faradique tend à devenir inférieur à 50 %.

Le dépôt de zinc sur la cathode étant peu adhérent, on pourra utiliser sur cette dernière, un vibreur pneumatique qui permet un décollement total du dépôt, ce qui laisse la cathode propre et lisse.

Ainsi, le vibreur agit séquentiellement de façon à permettre la formation d'un dépôt suffisamment important qui se décolle d'autant plus facilement sous l'effet de son propre poids.

La formation d'un dépôt important entraîne aussi l'avantage de provoquer une baisse de la résistance électrique du circuit et de la consommation énergétique et permet en plus l'augmentation du rendement faradique.

Le vibreur pneumatique adapté sur les cathodes de magnésium est utilisé avantageusement en cycles de 2 fois 5 secondes toutes les 45 mn pour le concentrations de zinc allant jusqu'à 13 g/l et toutes les 15 mn pour les concentrations en zinc de 13 à 8 g/l.

Ce vibreur a de préférence une puissance équivalente au vibreur de type CFP45 commercialisé par la Société Anonyme Française "Vibration industrielle" pour environ 5 cathode de 1 m$^2$, d'autres appareils peuvent également convenir.

Un lavage 10 à la sortie de l'électrolyse III permet d'éliminer les impuretés présentes avec la poudre de zinc et de détruire les agglomérats de zinc pouvant exister.

La poussière de zinc étant en milieu basique, il est indispensable d'éviter tout contact avec l'air de manière à éviter une oxydation du zinc.

Le lavage 10 de la poussière de zinc s'effectue par une solution de soude 6N exempte de zinc dissous de façon à entraîner les complexes de types zincates se trouvant dans la solution imprégnant la poussière ce qui permet d'éviter ensuite la formation d'hydroxyde de zinc lors de la neutralisation.

Puis, on effectue une passivation 11 à l'aide de bichromate de sodium ou autre passivant afin de former une couche de chromate de zinc à la surface de la poussière de zinc et éviter ainsi toute oxydation et carbonatation.

Ainsi, pour le bichromate de sodium, les réactions régissant la passivation sont :

$$2\,CrO_4^{2-} + 3\,Zn + 8\,H_2O \rightarrow 2\,Cr(OH)_3 + 3\,Zn^{2+} + 10\,OH^-$$

$$3\,CrO_4^{2-} + 3\,Zn^{2+} \rightarrow 3\,ZnCrO_4$$

La phase de lavage 10 tient compte des facteurs intervenant sur la pureté et la désagglomération des poudres.

Ainsi, une agitation suffisante de la poudre permet une élimination des zincates et une passivation totale. Une diminution de la granulométrie entraîne une augmentation de la surface spécifique. La masse du chromate ou d'un autre type de passivant ne doit pas altérer la pureté de la poudre par un excès trop important par rapport à la quantité nécessaire à la passivation totale. Aussi, on utilise de façon particulièrement avantageuse un système à ultrasons permettant la désagglomération de la poudre et également le fractionnement des fougères formées.

On obtient ainsi une baisse de la granulométrie, une amélioration du contact avec la poussière et une élimination de l'hydroxyde de zinc lors du lavage à la soude.

Les poudres de zinc obtenues présentent les caractéristiques suivantes :

- pureté > 95 %
- granulométrie moyenne de 1 à 10 $\mu$m
- forme : fougères, plaques
- surface spécifique de 0,9 à 4 m$^2$/g

Ces caractéristiques permettent une utilisation avantageuse des poudres de zinc lors de l'étape de cémentation II du procédé de l'invention. Un séparateur 12 permet à cet effet de déterminer la quantité 8' à recycler et la quantité de poudre 8" à récupérer que l'on lave à l'eau déminéralisée avant séchage à l'étuve entre 80 et 180°C.

- Apport complémentaire de zinc (A)

Selon une caractéristique essentielle du procédé selon l'invention, un apport en élément zinc est effectué en complément de l'introduction en phase de cémentation II de poudre de zinc métal. Cet apport complémentaire en zinc est effectuable à un moment quelconque du procédé après l'étape de lixiviation [en (A) (sortie de lixiviation), (A') (cémentation), ou (A") (électrolyse)] mais sous une forme solubilisée (Zn$^{++}$) ou soluble (oxyde). Le rôle premier de cet ajout de l'élément zinc est de parvenir à une concentration minimale, de l'ordre de 8 g/l, souhaitée en électrolyse pour satisfaire aux conditions requises dans cette phase au dépôt stable du zinc en poudre sur la cathode. Ceci permet de pallier la carence en zinc des terres à traiter et à laquelle ne peut répondre seul l'apport de zinc métallique effectué dans l'étape de cémentation II. La fonction première de ce dernier est en effet de réduire les métaux à récupérer en cément 6, et c'est seulement à concurrence de cette réaction redox que le zinc métal se retrouve ensuite sous forme solubilisée dans l'électrolyte.

Conformément à un mode préféré de réalisation de l'invention illustré sur la figure 2, on effectue cette introduction complémentaire de zinc sous forme solubilisée dans le lixiviat 4 issu de la phase de lixiviation I et à partir de déchets sidérurgiques naturellement riches en zinc à l'état d'oxyde, telles que les poussières d'aciérie électrique.

Ainsi, les poussières sidérurgiques 13, issues du dépoussiérage 14 des fumées d'un four électrique 15, sont soumises à un traitement de lixiviation basique IV, de manière, d'une part à solubiliser le Zn par attaque de ces oxydes par la soude, et d'autre part de précipiter le fer sous forme d'hydroxydes 16 insolubles afin de pouvoir l'extraire en vue d'une éventuelle récupération.

Le lixiviat basique 17 contenant le zinc solubilisé est ajouté au lixiviat principal 4 de traitement des terres en amont de la phase de cémentation II au moyen d'une vanne mélangeuse 18 qui permet de régler la proportion du lixiviat 17 dans le lixiviat 4.

Il peut en effet y avoir un inconvénient à introduire ce lixiviat 17 déjà dans la phase de lixiviation en raison de la propriété que peuvent présenter certaines terres de fixer du zinc, que l'on retrouverait ensuite dans la fraction solide terreuse 3 remise en décharge alors que la terre polluée traitée n'en contenait pas ou moins au départ.

Cela dit, l'ajout de ce lixiviat 17 peut être effectué à tout moment entre la sortie de l'étape de lixiviation I et l'étape d'électrolyse III.

Au besoin, la solution basique 9 issue de l'électrolyse pourra être elle-même électrolysée à nouveau pour abaisser simplement sa teneur en zinc dissous avant d'être recyclée dans la phase de lixiviation I, si les propriétés d'adsorption en zinc de la terre polluée conduisaient à dépasser les normes admises par la réglementation sur les décharges en milieu naturel. L'intensité du courant d'électrolyse pourra être sensiblement abaissée par rapport à celle mise en oeuvre en électrolyse I.

On notera que d'autres sources de zinc en complément des déchets sidérurgiques lixiviés peuvent convenir. Par exemple, les piles électriques usées représentent de nos jours un gisement riche en zinc tout à fait approprié à cet effet.

Le procédé de décontamination selon l'invention présente plusieurs avantages tels que sa simplicité de mise en oeuvre, l'absence de pollutions secondaires et sa sélectivité vis-à-vis des éléments métalliques à éliminer. Ainsi, par exemple, le fer non toxique n'est pas solubilisé.

Le procédé de décontamination selon l'invention peut permettre en outre dans certains cas une complète remise en place de la terre traitée sans qu'il y ait mise en décharge comme c'est le cas dans d'autres méthodes.

Le procédé de décontamination selon l'invention permet le recyclage des métaux extraits. Les métaux 6, ainsi récupérés et la poudre de zinc 8" produite par l'électrolyse peuvent être avantageusement revendus de façon à être réutilisés dans divers domaines d'application.

Le procédé de décontamination selon l'invention présente aussi l'avantage d'être non-polluant, le seul rejet effectué étant celui de l'eau salée.

Le procédé selon l'invention permet la récupération du zinc sous forme de poudre de zinc métallique utilisable commercialement dans divers domaines d'application tels que notamment les peintures anti-corrosion.

Il est facile de comprendre que tous les procédés hydrométallurgiques classiques de purification de la solution issue de l'étape de cémentation nécessaire pour traiter d'autres polluants non cités en exemple, peuvent être utilisés dans le cadre de l'invention de manière à pouvoir produire une poudre de zinc utilisable pour l'étape de cémentation du procédé de l'invention ou bien commercialisable.

On décrira maintenant plus complètement un mode de mise en oeuvre particulier, non limitatif, illustré par l'exemple ci-après de décontamination d'un échantillon de terre polluée par du plomb.

Un échantillon de 100 g de terre renfermant une teneur en plomb de 1,2 % est tamisée sur une maille de 0,8 mm.

Cet échantillon est ensuite soumis à une lixiviation pendant une durée de 1 h 30 et à une température de 95°C en moyenne. On utilise un litre d'une solution de soude de 250 à 300 g/l de NaOH.

Une injection de $H_2O_2$ à 2 % pour 100 ml est effectuée durant 30 mn après une heure de lixiviation. Si l'injection est réalisée dès le début de la lixiviation, la durée de celle-ci en serait sans doute abaissée.

On maintient une agitation intense.

De manière à obtenir une reprécipitation des alumino-silicates qui peuvent être passés en solution, on ajoute de la chaux (CaO) dans un rapport stoechiométrique supérieur à 1.

La séparation solide/liquide est effectuée dans une centrifugeuse à 2000 t/mn durant une minute.

La terre est alors remise en solution dans un litre de soude 6N.

La solution est agitée à l'aide d'un agitateur mécanique puis centrifugée de nouveau à 2000 t/mn durant une minute.

Cependant l'utilisation d'une solution de soude 6N n'est pas indispensable dans la mesure où il suffit de rester en milieu basique (ph = 14) pour éviter toute reprécipitation du plomb sous forme d'hydroxyde.

La terre récupérée à l'issue de la deuxième centrifugation est neutralisée à l'aide d'acide chlorhydrique dans un litre d'eau. La terre est laissée à décanter 1 heure puis, la solution est filtrée. Le résidu de terre est séché durant 24 h en étuve à 95°C.

La solution obtenue après lixiviation contient toujours environ 1,2 g/l de plomb et 1 à 3 g/l de silice.

On ajoute alors une quantité approximative de 1 litre de lixiviat basique 17 de poussières sidérurgiques à 40 g de zinc par litre de manière à atteindre au moment de l'électrolyse une teneur en zinc dissous de 20 g/l compte tenu de l'apport en zinc dissous réalisé lors de la cémentation.

On introduit ensuite précisément de la poudre de zinc métallique dans un rapport stoechiométrique avec le plomb de 1,5 à 2. La poudre de zinc est avantageusement celle produite lors de l'électrolyse.

Après une heure de cémentation opérée en agitant faiblement, la teneur en plomb est ramenée à moins de 70 mg/l.

L'électrolyse de la solution contenant le zinc est alors réalisée sur cathode de magnésium sous une densité de courant de 20 A/dm$^2$, à une température de 20°C.

On obtient ainsi une teneur en plomb de la terre inférieure à 300 ppm. La masse de terre récupérée est de 80 à 90 g et ne représente donc qu'une perte de 10 à 20 g.

Naturellement, et comme il résulte déjà amplement de ce qui précède, l'invention n'est pas limitée au mode particulier de réalisation qui a été décrit à titre d'exemple, mais englobe toutes les variantes et équivalents qui se lisent dans la définition de l'invention donnée dans les revendications jointes.

## Revendications

1. Procédé de décontamination de terres polluées par des éléments métalliques comportant :

   - une étape de lixiviation (I) des terres polluées (1) en milieu basique, de façon à provoquer la dissolution sélective d'éléments métalliques à éliminer,
   - une étape de cémentation (II) du lixiviat (4) issu de l'étape de lixiviation et provoquant le dépôt (6) desdits éléments sous forme de métal, effectuée par échange avec du zinc métallique,
   - et une étape d'électrolyse (III) de la solution (7) issue de l'étape de cémentation, produisant du zinc métallique (8),

   caractérisé en ce que l'on amène la concentration en zinc de la solution (7) issue de l'étape de cémentation à une valeur d'au moins 8g/l pour satisfaire aux conditions requises pour l'obtention de poudre de zinc dans l'étape d'électrolyse, par introduction de l'élément zinc, après l'étape de lixiviation, sous la forme de déchets sidérurgiques traités pour dissoudre le zinc qu'ils contiennent et en ce que l'on recycle le zinc métallique (8) produit sous forme de poudre à l'étape d'électrolyse (III) en tout ou partie (8') dans l'étape de cémentation pour satisfaire aux besoins (5) en zinc métallique de ladite étape de cémentation.

2. Procédé selon la revendication 1, caractérisé en ce que lesdits déchets sidérurgiques sont des poussières (13) d'aciérie électrique (15).

3. Procédé selon la revendication 1, ou 2, caractérisé en ce que l'électrolyse est réalisée avec une électrode de magnésium constituant la cathode.

4. Procédé selon la revendication 3, caractérisé en ce que l'électrolyse est effectuée sous une densité de courant élevée comprise entre 10 et 30 A/dm$^2$, et de préférence de l'ordre de 20 A/dm$^2$.

5. Procédé selon la revendication 4, caractérisé en ce que l'on soumet la cathode de l'electrolyse à des vibrations.

6. Procédé de décontamination selon la revendication 1, 3 ou 4, caractérisé en ce que l'étape d'électrolyse est réalisée à une température de 20 à 50°C et de préférence de l'ordre de 40°C.

7. Procédé selon la revendication 1, caractérisé en ce que l'étape de lixiviation en milieu basique est réalisée avec une solution de soude de 240 g/l à 300 g/l.

8. Procédé selon la revendication 1 ou 7, caractérisé en ce qu'on effectue une injection d'eau oxygénée au cours de la lixiviation.

9. Procédé selon l'une quelconque des revendications 1, 7 ou 8, caractérisé en ce qu'on effectue la lixiviation à une température supérieure ou égale à 90°C.

10. Procédé selon l'une quelconque des revendications 1, 7 ou 9, caractérisé en ce que la lixiviation est effectuée en présence d'ultrasons.

11. Procédé selon la revendication 1, caractérisé en ce que lors de l'étape de cémentation par la poudre de zinc (5), celle-ci est apportée dans un rapport stoechiométrique de 1 à 2 avec l'élément métallique.

**Claims**

1. Process for decontaminating soils polluted with metallic elements, comprising:

   - a stage of leaching (I) of the polluted soils (1) in a basic medium, so as to bring about the selective dissolution of metallic elements to be removed,
   - a stage of cementation (II) of the leachate (4) originating from the leaching stage and bringing about the deposition (6) of the said elements in metal form, performed by exchange with metallic zinc,
   - and a stage of electrolysis (III) of the solution (7) originating from the cementation stage, producing metallic zinc (8),
     characterized in that the concentration of zinc in the solution (7) originating from the cementation stage is brought to a value of at least 8 g/l to satisfy the conditions required to obtain zinc powder in the electrolysis stage by introducing elemental zinc after the leaching stage, in the form of waste from iron and steel manufacture treated to dissolve the zinc it contains, and in that the metallic zinc (8) produced in powder form in the electrolysis stage (III) is recycled in its entirety or partially (8') into the cementation stage to satisfy the requirements (5) for metallic zinc in the said cementation stage.

2. Process according to Claim 1, characterized in that the said waste from iron and steel manufacture is dust (13) from electrical steel manufacture (15).

3. Process according to Claim 1 or 2, characterized in that the electrolysis is carried out with a magnesium electrode forming the cathode.

4. Process according to Claim 3, characterized in that the electrolysis is performed with a high current density of between 10 and 30 A/dm$^2$, and preferably of the order of 20 A/dm$^2$.

5. Process according to Claim 4, characterized in that the cathode in the electrolysis is subjected to vibrations.

6. Decontamination process according to Claim 1, 3 or 4, characterized in that the electrolysis stage is carried out at a temperature of 20 to 50°C and preferably of the order of 40°C.

7. Process according to Claim 1, characterized in that the stage of leaching in a basic medium is carried out with a soda solution with a strength of 240 g/l to 300 g/l.

8. Process according to Claim 1 or 7, characterized in that an injection of aqueous hydrogen peroxide is performed during the leaching.

9. Process according to any one of Claims 1, 7 or 8, characterized in that the leaching is performed at a temperature higher than or equal to 90°C.

10. Process according to any one of Claims 1, 7 or 9, characterized in that the leaching is performed in the presence of ultrasound.

11. Process according to Claim 1, characterized in that during the stage of cementation with zinc powder (5), the latter is added in a stoichiometric ratio of 1 to 2 to the metallic element.

**Patentansprüche**

1. Verfahren zur Dekontaminierung von Böden, die durch metallische Elemente verschmutzt sind, umfassend:

   - einen Schritt der Auslaugung (I) der verschmutzten Böden (1) in basischem Milieu, um die selektive Auflösung der zu entfernenden metallischen Elemente zu bewirken,
   - einen Schritt der Zementation (II) des aus dem Auslaugungsschritt stammenden Auszugs (4), der den Niederschlag (6) dieser Elemente in metallischer Form bewirkt und durch Austausch mit metallischem Zink erfolgt,
   - und einen Schritt der Elektrolyse (III) der aus dem Zementationsschritt stammenden Lösung (7), der metallisches Zink (8) erzeugt, dadurch gekennzeichnet, daß man die Zinkkonzentration

der aus dem Zementationsschritt stammenden Lösung (8) auf einen Wert von mindestens 8 g/l bringt, um die Bedingungen zu erfüllen, die zur Gewinnung von Zinkpulver in dem Elektrolyseschritt erforderlich sind, indem man nach dem Auslaugungsschritt das Element Zink in Form von Eisenhüttenabfällen zuführt, die behandelt wurden, um das in ihnen enthaltene Zink zu lösen, und daß man das beim Elektrolyseschritt (III) in Pulverform erzeugte metallische Zink (8) ganz oder teilweise (8') in den Zementationsschritt rückführt, um den Bedarf (5) dieses Zementationsschritts an metallischen Zink zu decken.

2. Verfahren nach Anspruch 1, dadurch gekennzeichnet, daß die Eisenhüttenabfälle Stäube (13) aus einem Elektrostahlwerk (15) sind.

3. Verfahren nach Anspruch 1 oder 2, dadurch gekennzeichnet, daß die Elektrolyse mit einer Magnesiumelektrode erfolgt, welche die Kathode bildet.

4. Verfahren nach Anspruch 3, dadurch gekennzeichnet, daß die Elektrolyse mit einer hohen Stromdichte durchgeführt wird, die zwischen 10 und 30 A/dm$^2$ und vorzugsweise in der Größenordnung von 20 A/dm$^2$ liegt.

5. Verfahren nach Anspruch 4, dadurch gekennzeichnet, daß man die Kathode der Elektrolyse Vibrationen aussetzt.

6. Verfahren zur Dekontaminierung nach Anspruch 1, 3 oder 4, dadurch gekennzeichnet, daß der Elektrolyseschritt bei einer Temperatur von 20 bis 50°C und vorzugsweise in der Größenordnung von 40°C durchgeführt wird.

7. Verfahren nach Anspruch 1, dadurch gekennzeichnet, daß der Schritt der Auslaugung in basischem Milieu mit einer Natriumhydroxidlösung von 240 g/l bis 300 g/l durchgeführt wird.

8. Verfahren nach Anspruch 1 oder 7, dadurch gekennzeichnet, daß man im Laufe der Auslaugung Wasserstoffperoxid einspritzt.

9. Verfahren nach einem der Ansprüche 1, 7 oder 8, dadurch gekennzeichnet, daß man die Auslaugung bei einer Temperatur von mindestens 90°C durchführt.

10. Verfahren nach einem der Ansprüche 1, 7 oder 9, dadurch gekennzeichnet, daß die Auslaugung in Gegenwart von Ultraschall erfolgt.

11. Verfahren nach Anspruch 1, dadurch gekennzeichnet, daß bei dem Schritt der Zementation durch das Zinkpulver (5) dieses in einem stöchiometrischen Verhältnis zum metallischen Element von 1 bis 2 zugesetzt wird.

Fig. -1-

Fig. -2-

EP 0 642 394 B1